# EUROPEAN PATENT APPLICATION

(11) **EP 3 854 341 A1**
(43) Date of publication of application: **28.07.2021**
(21) Application number: 20186573.0
(22) Date of filing: 17.07.2020
(51) Int. Cl.: A61C 5/00, A61C 7/00, A61C 7/16, B33Y 80/00

(54) **ORTHODONTIC APPLIANCE WITH APERTURED BONDING PAD**

(30) Priority: 22.01.2020 US 202016749023
(71) Applicant: Dean UltraThin Retainer, LLC, Fosston, MN 56542 (US)
(72) Inventor: SANDWICK, Todd, Fosston, MN Minnesota 56542 (US)
(74) Representative: Neilson, Martin Mark

(57) **Abstract**

An orthodontic appliance, for example a fixed orthodontic retainer, is described that uses bonding pads with apertures extending through the bonding pads. The aperture bonding pads permit the use of a radiation curable adhesive, for example an ultra-violet (UV) light curable adhesive, to secure the bonding pads, and thus the orthodontic appliance, to the tooth surfaces. The bonding pads can be formed by a suitable additive manufacturing process, i.e. by 3D printing.

## Description

### Field

This technical disclosure relates to an orthodontic appliance including, but not limited to, a fixed orthodontic retainer, and the use of one or more apertured bonding pads to fix the orthodontic appliance to a patient's teeth.

### Background

Orthodontic appliances have been in use for years in the orthodontic field for providing a variety of orthodontic benefits, for example retention after completion of an active phase of orthodontic treatment. Orthodontic appliances such as retainers can be removable or fixed, and can be used on the upper set of teeth and/or on the lower set of teeth. Examples of removable orthodontic retainers are Hawley retainers and the retainers described in U.S. Patent 8827696. An example of a fixed retainer is described in U.S. Patent 6722878.

### Summary

Improvements relating to orthodontic appliances are described herein. The orthodontic appliances can be any orthodontic appliances that during use are bonded or fixed to the patient's teeth. In one non-limiting example, the orthodontic appliance can be a fixed orthodontic retainer. However, other orthodontic appliances are possible.

In the example case of a fixed orthodontic retainer, the language "fixed orthodontic retainer" used herein and in the claims refers to a retainer that is intended to be fixed in a patient's mouth for an extended period of time and is not intended to be temporarily removed by the patient and then reinserted by the patient like a traditional removable retainer like a Hawley retainer.

The fixed orthodontic retainers described herein can be, in use, fixed to the lower set of teeth and/or to the upper set of teeth of the patient. In addition, the fixed orthodontic retainers described herein can be, in use, fixed to the lingual surfaces of the patient's teeth (in which case the retainer may be referred to as a fixed lingual retainer) and/or to the facial (for example labial or buccal) surfaces of the patient's teeth (in which case the retainer may be referred to as a fixed facial retainer or fixed labial retainer or fixed buccal retainer). The fixed orthodontic retainers described herein can be designed and created for each individual patient and their teeth retention needs.

The orthodontic appliances described herein have at least one bonding pad that in use is bonded to the surface of one of the patient's teeth. The orthodontic appliance can include two or more of the bonding pads described herein. The orthodontic appliance can include three, four or more of the bonding pads. The orthodontic appliance can have two bonding pads with the two bonding pads intended to be secured to respective tooth surfaces and a wire spanning across multiple teeth. The orthodontic appliance can have multiple bonding pads, one for each tooth that the appliance extends over.

Each bonding pad has a plurality of apertures that extend completely therethrough in a thickness direction of the bonding pad. The apertures permit use of a radiation curable adhesive, for example an ultra-violet (UV) light curable adhesive, to secure the bonding pads, and thus the orthodontic appliance, to the tooth surfaces. In particular, the apertures permit the UV curable adhesive to flow up and through the apertures as well as permit curing radiation, for example UV light, to reach the UV curable adhesive to cure the adhesive. Each bonding pad can include what may be referred to as a mesh portion that forms the plurality of apertures.

The bonding pads and the wire can be formed separately, and then later suitably secured to one another. Alternatively, the bonding pads and the wire can be integrally formed of a single material so as to form a single piece unitary construction. For example, the bonding pads and the wire can be integrally formed by a suitable additive manufacturing process. Additive manufacturing as used herein is intended to encompass any process where the bonding pads and the wire are created by adding layer-upon-layer of material to create the appliance. Additive manufacturing may also be referred to as 3D printing. The appliances described herein can be created using a subtractive manufacturing process. However, the appliances described herein can be created using other manufacturing techniques as well, for example by casting.

The bonding pads and the wire can be made of any material that one finds suitable for forming an orthodontic appliance. Examples of materials that can be used include, but are not limited to, metals including but not limited to pure metals such as gold, platinum, or titanium or metal alloys such as nickel titanium or a cobalt, chromium, molybdenum alloy; graphene; carbon; carbon fiber; plastic; and ceramic.

In one aspect, there is provided an orthodontic appliance comprising:
at least one bonding pad having a plurality of apertures extending completely therethrough in a thickness direction of the at least one bonding pad; and
a wire fixed to the at least one bonding pad.

The at least one bonding pad and the wire may be made of pure metal, a metal alloy, graphene, carbon or carbon fiber.

The at least one bonding pad and the wire may be integrally formed of a single material and form a single piece unitary construction.

The at least one bonding pad and the wire may be integrally formed by additive manufacturing.

The orthodontic appliance may comprise two or more of the bonding pads, and the wire may extend between each bonding pad.

The at least one bonding pad may include a mesh portion that forms the plurality of apertures.

The orthodontic appliance may be a fixed orthodontic retainer.

The orthodontic appliance may further comprise an artificial tooth secured to the wire and/or to the bonding pad.

The orthodontic appliance may further comprise a positive seat integrally formed with, or secured to, the bonding pad and/or to the wire.

In another aspect, there is provided a method of forming an orthodontic appliance for a patient, comprising:
using a digital data file to control an additive manufacturing machine to form a bonding pad of the orthodontic appliance by additive manufacturing, wherein the bonding pad that is formed has a plurality of apertures extending completely through the bonding pad in a thickness direction of the bonding pad.

The method may further comprise using the digital data file to control the additive manufacturing machine to form a wire of the orthodontic appliance together with the bonding pad by additive manufacturing.

The method may comprise forming the bonding pad and the wire using a metal material, graphene, carbon or carbon fiber.

The orthodontic appliance may be a fixed orthodontic retainer.

The method may further comprise securing an artificial tooth to the wire and/or to the bonding pad.

The method may further comprise integrally forming a positive seat with the bonding pad and/or the wire.

The method may further comprise securing a positive seat to the bonding pad and/or the wire.

The orthodontic appliance that is formed according to the method of this aspect may have any of the features of the orthodontic appliance described elsewhere in this document, including in the text set out above relating to the orthodontic appliance itself.

In another aspect, there is provided a process of securing an orthodontic appliance to a patient's teeth, comprising:
applying a radiation curable adhesive and a bonding pad having a plurality of apertures extending completely therethrough in a thickness direction of the bonding pad onto a surface of a tooth of the patient so that the radiation curable adhesive is disposed between the surface and a tooth facing side of the bonding pad and the radiation curable adhesive extends through the apertures;
applying radiation to the radiation curable adhesive to cure the radiation curable adhesive thereby adhering the bonding pad to the surface of the tooth.

The tooth may be one of an upper set of teeth of the patient or one of a lower set of teeth of the patent.

The surface of the tooth may be a lingual surface or a labial surface.

The orthodontic appliance may be a fixed orthodontic retainer.

The orthodontic appliance that is secured to a patient's teeth according to the method of this aspect may have any of the features of the orthodontic appliance described elsewhere in this document, including in the text set out above relating to the orthodontic appliance itself.

### Drawings

Figures 1A and 1B are perspective views of a lower set of teeth with an orthodontic appliance, for example a fixed orthodontic retainer, described herein fixed thereto, with the retainer shown on the lingual surfaces of a subset of the lower teeth in Figure 1A, and the retainer shown on the labial surfaces of the subset of the lower teeth in Figure 1B.
Figures 2A and 2B are perspective views of an upper set of teeth with a fixed orthodontic retainer described herein fixed thereto, with the retainer shown on the lingual surfaces of a subset of the upper teeth in Figure 2A, and the retainer shown on the labial surfaces of the subset of the upper teeth in Figure 2B.
Figure 3 is a close-up view of a portion of an orthodontic appliance such as the fixed orthodontic retainer including one of the bonding pads and a portion of the retainer wire integrally formed with the bonding pad.
Figure 4 is a close-up view of a portion of another embodiment of the orthodontic appliance such as the fixed orthodontic retainer including one of the bonding pads and a portion of the retainer wire separate from the bonding pad.
Figure 5 shows an embodiment of the fixed orthodontic retainer with two bonding pads.
Figures 6A and 6B are close-up views of additional embodiments of possible bonding pad shapes that can be used in the orthodontic appliances described herein.
Figure 7 is a detailed side cross-sectional view showing UV curable adhesive extending upward through the apertures in one of the bonding pads.

### Detailed Description

The following is a description of orthodontic appliances made of metal or non-metallic materials such as graphene, carbon, carbon fiber, and techniques for forming the orthodontic appliances and securing the appliances to patient's teeth. The orthodontic appliances can be any orthodontic appliance used to perform an orthodontic treatment of a patient on the upper set of teeth and/or teeth in a lower set of teeth. To facilitate the description, the orthodontic appliances will be hereinafter described as being fixed orthodontic retainers used to retain teeth in an upper set of teeth or teeth in a lower set of teeth. However, it is to be realized that the concepts described herein can be applied to other orthodontic appliances as well. Unless otherwise indicated in the claims to the contrary, the language "fixed orthodontic retainer" is to be construed as encompassing both an orthodontic retainer for a subset of teeth in the upper set of teeth and an orthodontic retainer for a subset of teeth in the lower set of teeth.

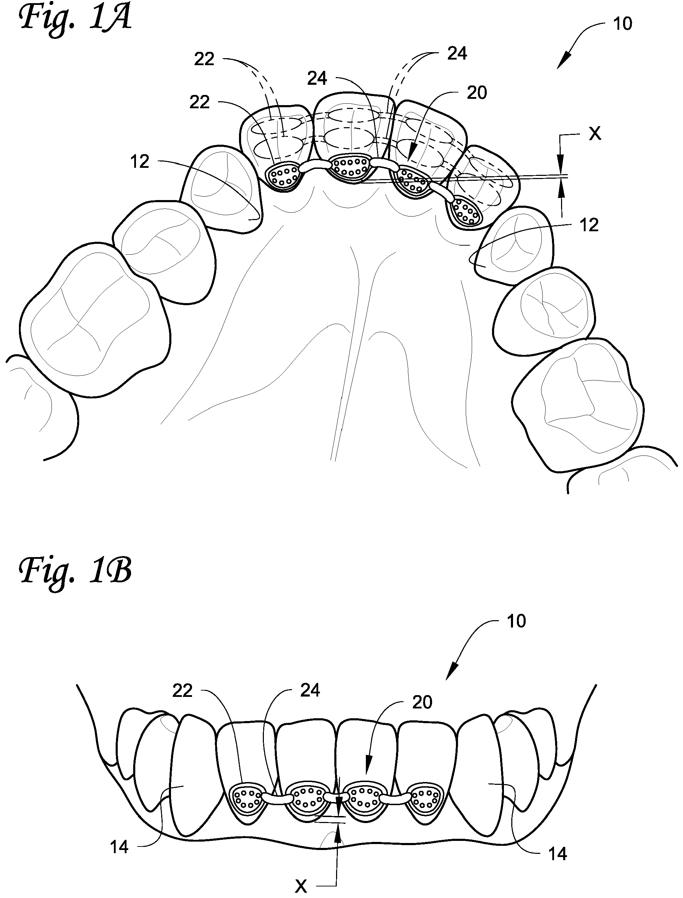

Referring initially to Figures 1A and 1B, a lower set of teeth 10 is illustrated. The teeth 10 can be generally described as including lingual surfaces 12 (i.e. surfaces that face generally inward toward the tongue and mouth) and facial surfaces 14 (i.e. surfaces that face generally outward). The facial surfaces 14 include labial surfaces on teeth that face toward the lips, and buccal surfaces on teeth that face toward the cheeks. In Figure 1A, a fixed orthodontic retainer 20 described herein is illustrated as being fixed to the lingual surfaces 12 of a subset of teeth to be retained by the retainer 20. In particular, the retainer 20 is illustrated as including a number of bonding pads 22 (in this example four bonding pads 22) each of which is fixed to the lingual surface 12 of a corresponding tooth, and a rigid retainer wire 24 that extends between and is fixed to each of the bonding pads 22. In this embodiment, the retainer 20 may also be referred to as a fixed lingual retainer.

In an alternative embodiment that is illustrated in Figure 1B, the bonding pads 22 can be fixed to the facial surfaces 14 of the subset of the teeth, and the retainer wire 24 extends between and is fixed to each of the bonding pads 22. In this example, Figure 1B illustrates the retainer 20 as being fixed to the labial surfaces of the teeth, whereby the retainer 20 may also be referred to as a fixed labial retainer.

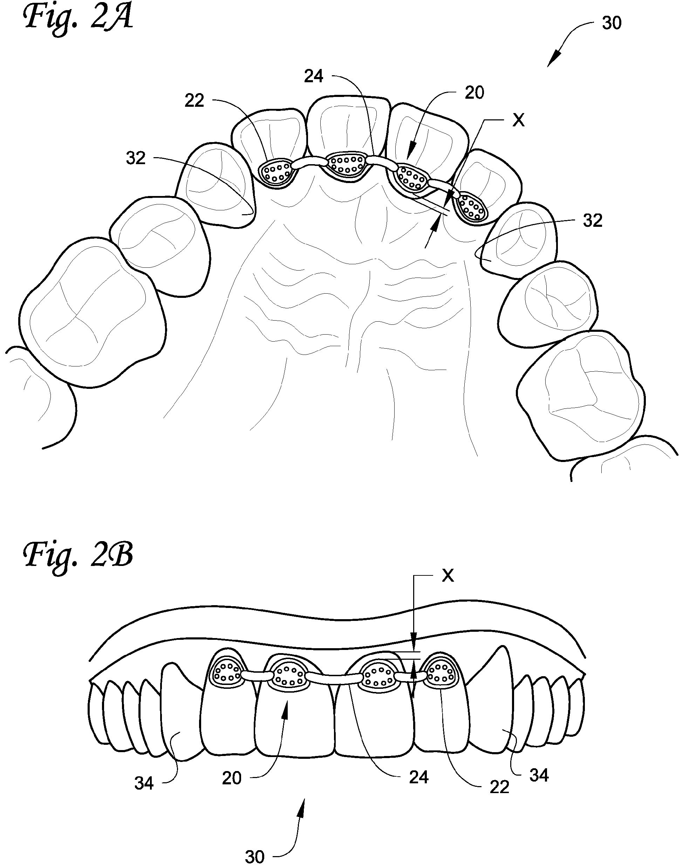

Referring to Figures 2A and 2B, an upper set of teeth 30 is illustrated. The teeth 30 can be generally described as including lingual surfaces 32 (i.e. surfaces that face generally inward toward the tongue and mouth) and facial surfaces 34 (i.e. surfaces that face generally outward). The facial surfaces 34 include labial surfaces on teeth that face toward the lips, and buccal surfaces on teeth that face toward the cheeks. In Figure 2A, the fixed orthodontic retainer 20 described herein is illustrated as being fixed to the lingual surfaces 32 of a subset of teeth to be retained by the retainer 20. In particular, the bonding pads 22 are fixed to the lingual surface 32 of a corresponding tooth, and the rigid retainer wire 24 extends between and is fixed to each of the bonding pads 22. In this embodiment, the retainer 20 may also be referred to as a fixed lingual retainer.

In an alternative embodiment that is illustrated in Figure 2B, the bonding pads 22 can be fixed to the facial surfaces 34 of the subset of the teeth, and the retainer wire 24 extends between and is fixed to each of the bonding pads 22. In this example, Figure 2B illustrates the retainer 20 as being fixed to the labial surfaces of the teeth, whereby, the retainer 20 may also be referred to as a fixed labial retainer.

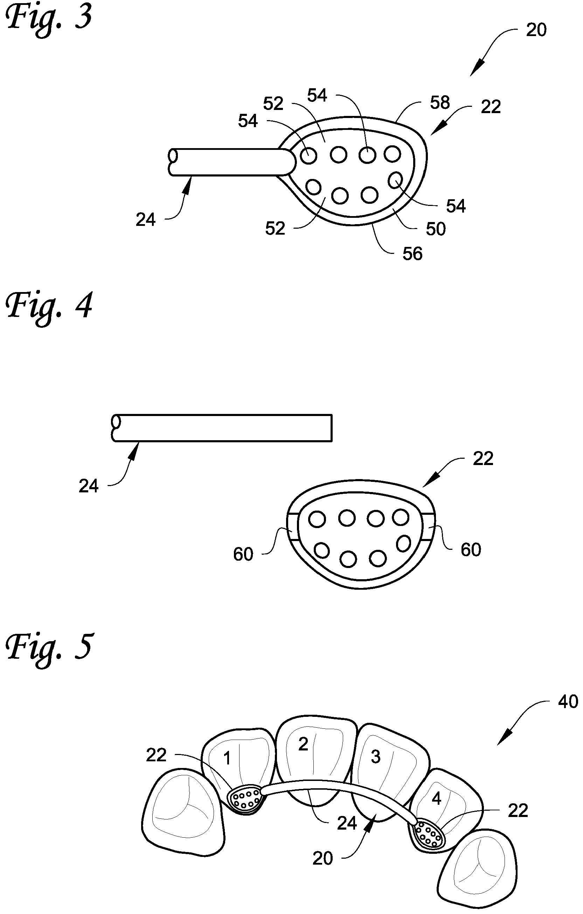

Figures 1A, 1B, 2A and 2B illustrate the retainer 20 as having one of the bonding pads 22, in this example four of the bonding pads 22, fixed to the surface of each tooth to be retained. However, other constructions are possible. For example, referring to Figure 5, a partial set of teeth 40 (which can be a lower set of teeth or an upper set of teeth) is illustrated, and the retainer 20 is shown as having two of the bonding pads 22 secured to the lingual surfaces of what may be referred to as teeth numbers 1 and 4, and the rigid retainer wire 24 extends between and is fixed to the two bonding pads 22 and extends across teeth numbers 1 to 4. The retainer 20 in Figure 5 could also be secured to the facial surfaces, for example the labial surfaces, of the teeth.

While Figures 1A, 1B, 2A, 2B and 5 illustrate the retainer 20 being used to retain four teeth, the retainer 20 can be configured to retain a smaller number of teeth including two or three teeth, or a larger number of teeth. If two teeth are being retained, one of the bonding pads 22 would be disposed on a surface of each tooth and the retainer wire 24 would extend between and be fixed to each one of the bonding pads 22. If three teeth are being retained, one of the bonding pads 22 can be disposed on each tooth or two of the bonding pads can be disposed on teeth 1 and 3 with the retainer wire extending between and fixed to each of the bonding pads 22 and extending over all three teeth. If more than four teeth are being retained, the bonding pads can be disposed on each tooth, or any number of the teeth as long as there is a bonding pad on the end teeth of the sequence of teeth being retained.

In another embodiment, the retainers described herein extend across a missing tooth whereby the retainer is used to maintain a gap between two teeth. For example, in the example depicted in Figure 5, tooth 2 or tooth 3 could be missing and the retainer 20 could be used as depicted to maintain a gap between teeth 1 and 3 or between teeth 2 and 4.

In still another embodiment, one or more artificial teeth can be secured to the retainers described herein, for example to the retainer wire and/or to one of the bonding pads. The artificial tooth fills in a gap between teeth of the patient when the retainer is installed. For example, in the example depicted in Figure 5, tooth 2 could be missing and the retainer 20 can include an artificial tooth, for example fixed to the retainer wire 24, that fills the gap between teeth 1 and 3 when the retainer 20 is installed.

The bonding pads 22 described herein can be secured to the tooth surfaces using any type of bonding technique known in dentistry. Examples of suitable bonding agents that can be used include, but are not limited to, radiation curable adhesives such as ultra-violet (UV) light curable adhesives, and non-UV light curable adhesives.

However, the construction of the bonding pads 22 of the retainer 20 are particularly useful with the use of radiation curable adhesives, such as UV light curable adhesives, to secure the bonding pads 22, and thus the orthodontic retainer 20, to the tooth surfaces (whether the lingual surfaces or the facial/labial surfaces). Conventional pads used on conventional fixed orthodontic retainers are solid in construction and are typically secured using a non-radiation curable adhesive or bonding material since the solid construction of the conventional bonding pad prevent UV light from reaching a UV curable adhesive located between the conventional bonding pad and the tooth surface. However, a UV curable adhesive provides a more secure and stronger attachment of the bonding pad 22 to the tooth surface. So the bonding pads 22 described herein are configured in a manner to permit UV light to reach the backside of the bonding pad and any adhesive located between the bonding pad 22 and the tooth surface, which therefore permits the use of UV curable adhesive.

In particular, as described in further detail below, each of the bonding pads 22 has a plurality of apertures therein. The apertures extend completely through the bonding pads 22 in a thickness direction of the bonding pad 22. When fixing the bonding pad 22 to the tooth surface, the apertures permit UV curable adhesive to flow up and through the apertures as well as permit UV light to reach the UV curable adhesive located between the bonding pad 22 and the tooth surface to cure the adhesive.

However, in some embodiments, bonding materials other than UV light curable adhesive could be used to secure the bonding pads to the tooth surfaces. For example, glass ionomer cement and glass ionomer hybrid materials, composite resins, 4-methacryloyloxyethy trimellitate anhydride (4-META), Panavia™, self-cure composites, light curable composites, and other bonding materials used in orthodontics or dentistry could be used.

In some embodiments, to enhance bonding of the bonding pads 22 to the tooth surfaces, some or all of the surfaces of the bonding pad can be etched to increase the bonding surface area of the bonding pads 22. For example, in one embodiment, the tooth facing surfaces of the bonding pads 22 can be etched, for example micro-etched, prior to application to the tooth surfaces to increase the bonding surface area of the bonding pads 22. In other embodiments, the tooth facing surfaces of the bonding pads 22 can be manufactured so as to be rough to simulate a resulting etched surface and increase the bonding surface area. In another embodiment, the entire surface of the bonding pad 22, including non-tooth facing surfaces, can be etched to increase the bonding surface area. Etching can be performed using any suitable etching technique, for example using a blasting powder or an acid.

Referring to Figure 3, a portion of the retainer 20 including one of the bonding pads 22 and a portion of the retainer wire 24 are illustrated. Only one of the bonding pads 22 is shown in Figure 3, it being understood that the other bonding pad(s) 22 of the retainer 20 has an overall general construction that is similar to the illustrated bonding pad 22. In the illustrated example, the bonding pad 22 includes a perimeter frame 50 that defines the perimeter of the bonding pad 22. In this example, a material 52 is disposed within the perimeter frame 50, and a plurality of apertures 54 are formed in the material 52. The apertures 54 extend completely through the bonding pad 22 in the thickness direction of the bonding pad 22 so that the front or first side of the bonding pad 22 is in communication with the rear or second side of the bonding pad 22 via the apertures 54. The material 52 together with the apertures 54 form what may be referred to as a mesh or a mesh portion of the bonding pad 22.

The bonding pads 22 can be located at any position on the tooth surfaces dependent upon, for example, the needs of the patient. For example, the pads 22 can be located anywhere from against the gum line up to near the top of the tooth surfaces. In the illustrated example of Figures 1-5, the frame 50 has a bottom edge portion 56 that can be curved to generally match the curvature of the gum line (or curved to generally match the cingulum of the tooth to which the bonding pad is attached). The curved bottom edge portion 56 permits the bonding pads 22 and the retainer 20 itself to be located at a position that is lower on the tooth surfaces compared to traditional fixed orthodontic retainers. For example, the bonding pads 22 may be located on either the lingual surfaces or on the facial surfaces so that the bottom edge portion 56 may be a distance X of 0 to 10 mm from the gum line. Figures 1A, 1B, 2A and 2B illustrate the bonding pads in solid line on the tooth surfaces near, but slightly spaced from, the gum line. Figure 1A also depicts (in broken lines) the bonding pads 22 located on the tooth surfaces at approximately the mid-height of the teeth (a similar position is possible in Figures 1B, 2A and 2B). Figure 1A also depicts (in broken lines) the bonding pads 22 located on the tooth surfaces near the top of the tooth surfaces (a similar position is possible in Figures 1B, 2A, and 2B).

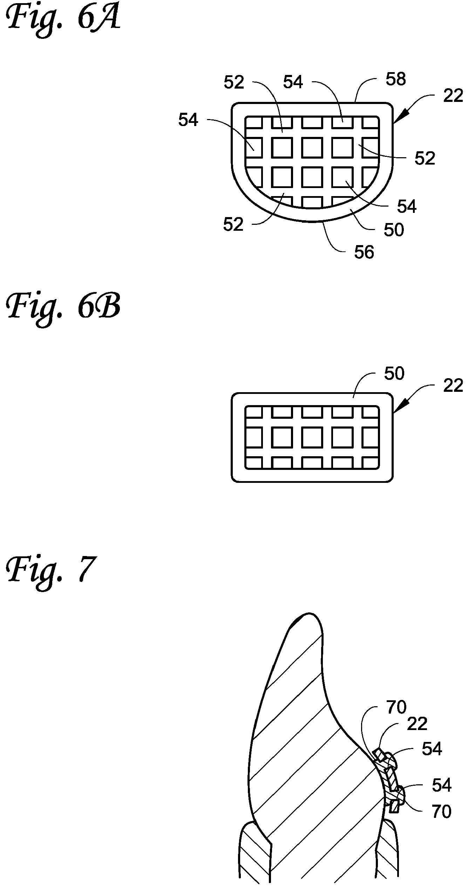

The frame 50 also has a top edge portion 58. Figure 3 illustrates the top edge portion 58 as being curved somewhat like the bottom edge portion 56. However, other shapes of the frame 50, including the bottom edge portion 56 and the top edge portion 58, are possible. For example, Figure 6A shows the bonding pad 22 with the frame 50 having the curved bottom edge portion 56 but the top edge portion 58 is straight or linear. Figure 6B shows the bonding pad 22 with the frame 50 being substantially rectangular in shape. The frame 50 of the bonding pad 22 can have other symmetrical or non-symmetrical geometrical shapes including, but not limited to, substantially square, substantially triangular, substantially pentagonal, and the like.

Returning to Figures 1A, 1B, 2A, 2B, although the general shape of each of the bonding pads 22 is generally the same, the specific shape of each bonding pad 22 can vary from one another depending upon factors including, but not limited to, the shape of the tooth to which the bonding pad 22 is to be adhered. Some of the bonding pads 22 may be laterally wider (e.g. side-to-side) than others. Some of the bonding pads 22 may be vertically taller than others. Some of the bonding pads 22 may have a larger or smaller number of apertures 54 than others. Some of the bonding pads 22 may have a configuration like that shown in Figures 1A, 1B, 2A, 2B while other ones of the bonding pads 22 of the retainer may have a configuration like that shown in Figures 6A and/or 6B.

Returning to Figure 3, the retainer wire 24 is a generally rigid structure that is fixed to the bonding pad 22. In the embodiment shown in Figure 3, the bonding pad 22 (and the other non-illustrated bonding pad(s) 22) and the retainer wire 24 are integrally formed of a single material and form a single piece unitary construction with each other. For example, the bonding pads 22 and the retainer wire 24 can be integrally formed together by a suitable additive manufacturing process. Additive manufacturing as used herein is intended to encompass any process where the bonding pads 22 and the retainer wire 24 are created by adding layer-upon-layer of material to create the retainer 20. Additive manufacturing may also be referred to as 3D printing. In another embodiment, the retainer 20, including the bonding pads 22 and the retainer wire 24 can be integrally formed with one another using a subtractive manufacturing process. In another embodiment, the retainer 20, including the bonding pads 22 and the retainer wire 24, can be integrally formed with one another using other manufacturing techniques as well, for example by casting.

Examples of additive manufacturing processes that can be utilized to create the retainers describe herein include, but are not limited to, Selective Laser Melting (SLM), Selective Laser Sintering (SLS), Direct Metal Laser Sintering/Melting (DMLS or DMLM), Fused Deposition Modeling (FDM), Fused Filament Fabrication (FFF), Stereolithography (SLA), binder jetting, and Laminated Object Manufacturing (LOM).

Referring to Figure 4, in another embodiment, the bonding pads 22 and the retainer wire 24 can be initially formed separately from one another, and then secured to one another to create the retainer 20. For example, the bonding pads 22 could be formed with one or more retaining features 60, such as slots, that permit the retainer wire 24 and the bonding pads 22 to be permanently secured to one another. For example, the retaining feature(s) 60 can permit the retainer wire 24 to snap fit connect to the bonding pads 22, or permit the retainer wire 24 and the bonding pad 22 to be welded or adhesively secured to one another. In the embodiment of Figure 4, the bonding pads 22 and the retainer wire 24 can each be formed via an additive manufacturing process, such as 3D printing, by casting, or by any other manufacturing process(es) and thereafter the bonding pads 22 and the retainer wire 24 are secured to one another.

The bonding pads 22 and the retainer wire 24 can be made of any single material or combination of materials that one finds suitable for forming the orthodontic retainer 20. Examples of materials that can be used include, but are not limited to, metal, graphene, carbon, carbon fiber, plastic, and ceramic. In the case of metal, the metal can be any metal suitable for use in dental applications and that provides the requisite durability and strength needed for a fixed orthodontic retainer. Examples of metals that can be used include, but are not limited to, gold, platinum, titanium, and metal alloys such as an alloy primarily composed of cobalt, chromium and molybdenum having the brand name VITALLIUM, or a nickel titanium alloy.

In one embodiment, the retainers described herein can be formed with one or more positive seats that are configured to at least partially wrap around one or more of the teeth. Examples of positive seats include, but are not limited to, ball clasps, C clasps, and the like. The positive seat(s) can be integrally formed with one of the bonding pads 22 and/or with the retainer wire 24, or be formed separately and then secured to the bonding pad 22 and/or the retainer wire 24. The positive seat(s) helps to ensure that the retainer is properly oriented and installed on the patient since the positive seat(s) ensures that the retainer can only be properly oriented in one orientation on the patient.

The following is an example technique of creating the retainer 20 by additive manufacturing, where the retainer 20 is designed for use on the lingual surfaces of four teeth of the lower set of teeth of the patient. To create the retainer 20, a digital scan of relevant portions of the patient's mouth is obtained to create a digital data file. The digital scan can be performed using conventional digital scanning techniques such as performing a scan of an impression of the patient's mouth, or using an intra-oral digital scanner to intraorally scan the patient's mouth. Examples of intra-oral scanners include, but are not limited to, Planmeca's PlanScan, 3Shape's TRIOS, Sirona's Apollo DI and OmniScan, Invisalign's Itero and 3M's True Definition Scanner. The digital data file is then used to generate an image of the patient's teeth. The retainer 20, including the bonding pads 22 and the retainer wire 24, are then electronically designed and an image of the retainer 20 is generated and electronically overlaid in position on the lingual surfaces of the image of the patient's teeth.

Once the design of the retainer 20 is finalized, the digital data file of the retainer 20 is used to control an additive manufacturing machine to form the retainer 20, including the bonding pads 22 and the retainer wire 24, by additive manufacturing. Applicant believes that processing and formatting digital data for use in creating 3D printed products is well known in the art. Further, the digital data file can easily be saved for later re-fabrication of another retainer 20 if necessary. In the embodiment of Figure 4, it is possible that a single one of the bonding pads 22 or multiple ones of the bonding pads 22 can be formed separately from the retainer wire 24.

Referring to Figure 7, once the retainer 20 is created, the retainer 20 needs to be secured to the patient's teeth. Assuming the retainer 20 is to be fixed to the lingual surfaces of four teeth of the lower set of teeth of the patient, Figure 7 is a side cross-sectional view of one tooth showing the bonding pad 22 on the lingual surface of that tooth. To secure the bonding pad 22 to the tooth, a UV curable adhesive 70 can be used. The UV curable adhesive 70 can first be applied to the tooth surface, followed by placing the bonding pad 22 on the tooth over the applied adhesive 70. Alternatively, the UV curable adhesive 70 can be applied to the tooth facing side of the bonding pad 22, and then the bonding pad 22 placed in position onto the lingual surface. Any means or sequence for applying the UV curable adhesive 70 and the bonding pad 22 to the tooth surface can be utilized. Regardless of the sequence used, some of the UV curable adhesive 70 remains between the tooth facing surface (or rear surface) of the bonding pad 22, while some of the UV curable adhesive 70 flows upward through the apertures 54 and possibly onto the front surface of the bonding pad 22. UV radiation from a UV light source (which is known in the art) is then directed onto the bonding pad 22 and the UV curable adhesive 70. The UV radiation cures the radiation curable adhesive 70 thereby adhering the bonding pad 22 to the lingual surface of the tooth.

The examples disclosed in this application are to be considered in all respects as illustrative and not limitative. The scope of the invention is indicated by the appended claims rather than by the foregoing description; and all changes which come within the meaning and range of equivalency of the claims are intended to be embraced therein.

## Claims

1. A method of forming an orthodontic appliance for a patient, comprising:
using a digital data file to control an additive manufacturing machine to form a bonding pad of the orthodontic appliance by additive manufacturing, wherein the bonding pad that is formed has a plurality of apertures extending completely through the bonding pad in a thickness direction of the bonding pad.

2. The method of claim 1, further comprising using the digital data file to control the additive manufacturing machine to form a wire of the orthodontic appliance together with the bonding pad by additive manufacturing.

3. The method of claim 2, comprising forming the bonding pad and the wire using a metal material, graphene, carbon or carbon fiber.

4. The method of any one of claims 1 to 3, wherein the orthodontic appliance is a fixed orthodontic retainer.

5. The method of claim 4, wherein the fixed orthodontic retainer is for an upper set of teeth of the patient.

6. The method of claim 4, wherein the fixed orthodontic retainer is for a lower set of teeth of the patient.

7. The method of claim 4, wherein the fixed orthodontic retainer is for lingual surfaces of teeth of the patient.

8. The method of claim 4, wherein the fixed orthodontic retainer is for labial surfaces of teeth of the patient.

9. The method of claim 2, or any one of claims 3 to 8 when dependent on claim 2, further comprising securing an artificial tooth to the wire and/or to the bonding pad.

10. The method of claim 2, or any one of claims 3 to 9 when dependent on claim 2, further comprising integrally forming a positive seat with the bonding pad and/or the wire.

11. The method of claim 2, or any one of claims 3 to 9 when dependent on claim 2, further comprising securing a positive seat to the bonding pad and/or the wire.

12. An orthodontic appliance formed by the method according to any one of claims 1 to 11.
